# DEMANDE DE BREVET EUROPEEN

(11) **EP 2 196 950 A1**
(43) Date de publication de la demande: **16.06.2010**
(21) Numéro de dépôt: 08305948.5
(22) Date de dépôt: 15.12.2008
(51) Int. Cl.: G06K 19/077, G06K 19/06

(54) **Support de données à puce comprenant un élément de sécurité actif**

(71) Demandeur: Gemalto SA, 92190 Meudon (FR)
(72) Inventeur: Plessis, Patrice, 13780, Cuges les Pins (FR)

(57) **Abrégé**

L'invention concerne un support de données comprenant un élément de sécurité actif, apte à changer d'état selon que le support de données est soumis à une tension d'alimentation ou non. L'élément de sécurité comprend au moins un matériau ou nanomatériau de type chromogène bistable, apte à passer d'un premier état d'opacité à un deuxième état d'opacité différent du premier état, lorsqu'il est soumis à une tension d'alimentation, afin d'afficher une information de sécurité.

## Description

La présente invention concerne un support de données comprenant un élément de sécurité actif, apte à changer d'état selon que le support de données est soumis à une tension d'alimentation ou non.

L'invention se situe dans le domaine des supports de données à puce avec et/ou sans contact, de type documents d'identification, tels que des permis de conduire, des cartes d'identité, des cartes de membre, des badges d'accès, des passeports, des cartes bancaires, des porte-monnaie électroniques, des cartes multi application et autres support de valeurs. Du fait de la valeur et de l'importance associée à chacun de ces supports, ils font souvent l'objet de copies non autorisées, d'altérations, de modifications, et contrefaçons.

Pour éviter que de telles fraudes soient réalisées sur ces supports de données, différents types de moyens de sécurisation sont utilisés. Une solution, dans les applications identitaires notamment, consiste à superposer des lignes ou guilloches sur une image d'identification, de type photographie, pour éviter toute modification ultérieure de l'image. D'autres solutions, utilisées pour différentes applications de type bancaire, transport, accès identitaire ou autre, consistent à ajouter des éléments de sécurité de type hologrammes, informations imprimées avec une encre réagissant aux rayonnements ultraviolets, des micro lettres cachées dans une image ou un texte, des lenticules aptes à faire apparaître deux informations différentes selon deux angles d'inclinaison différents de la carte, une fenêtre translucide comprenant une information sécuritaire de type empreinte, hologramme etc...

Cependant, tous les éléments sécuritaires réalisés jusqu'à présent sont passifs, c'est-à-dire qu'ils sont figés et ne changent pas d'état en fonction de l'environnement du support de données, par exemple selon que le support est alimenté en tension ou non.

L'invention vise donc à prévoir un élément de sécurité actif.

Il existe des cartes à puces à contact comportant une diode électroluminescente (LED) destinée à s'allumer lorsque la puce est alimentée en tension via les contacts d'un terminal. Cependant, la LED est dans ce cas uniquement prévue pour signaler que la carte est en communication avec le lecteur, mais elle n'est pas prévue pour afficher une information sécuritaire. De plus, les LED étant consommatrices de courant, il n'est pas possible d'en insérer plusieurs, pour former un motif sécuritaire, dans le corps de carte car sinon elles perturberaient le fonctionnement de la carte elle-même.

Il existe par ailleurs des dispositifs de type détecteur de champ comprenant une antenne reliée à une diode électroluminescente apte à s'allumer lorsqu'un champ magnétique de 13,56 MHz est détecté. Ce type de détecteur a été divulgué par la société Spirtech. L'inconvénient de ce type de détecteur réside dans le fait que les LED sont consommatrices de courant si bien qu'elles requièrent une alimentation dédiée, c'est-à-dire une antenne et une puce dédiée, qui prennent de la place et ne peuvent pas être intégrées dans une carte à puce sans contact. Par conséquent, le détecteur est réalisé sur une carte spécifique à part et peut être utilisé à proximité d'une carte sans contact pour détecter si cette carte est soumise à un champ électromagnétique et donc si elle communique des données. Cependant, dans ce cas encore, la LED ne s'allume que pour signaler que la carte est sous tension et en fonctionnement, mais elle n'est pas prévue pour afficher une information sécuritaire.

Aussi, le problème technique objet de la présente invention consiste à proposer un support de données à puce, comportant au moins un élément de sécurité, qui permettrait d'afficher, ou non, une information de sécurité selon que le support est soumis à une tension d'alimentation, ou non.

La solution au problème technique posé est obtenue, selon la présente invention, par le fait que l'élément de sécurité comprend au moins un matériau ou nanomatériau, de type chromogène bistable, apte à passer d'un premier état, présentant un premier coefficient de transmission lumineuse, à un deuxième état, présentant un deuxième coefficient de transmission lumineuse différent de celui du premier état, lorsqu'il est soumis à une tension d'alimentation, afin d'afficher une information de sécurité.

P a r « état présentant un coefficient de transmission lumineuse», on entend un état qui peut soit laisser passer la lumière transmise, soit l'absorber. Dans le premier cas l'état est dit au moins translucide voire complètement transparent, dans le deuxième cas, il est plus ou moins opaque.

Ainsi, l'élément de sécurité devient actif puisqu'une information de sécurité n'est affichée que si le support de données est alimenté. Cet affichage de l'élément de sécurité permet donc non seulement d'indiquer que le support de données est en fonctionnement, mais en plus de vérifier l'authenticité du support de données, ou l'authenticité d'un échange d'informations, etc...

Plus précisément l'invention est dans un premier temps support de données à puce, comportant au moins un élément de sécurité, l'élément de sécurité comprend au moins un matériau ou nanomatériau de type chromogène bistable, apte à passer d'un premier état d'opacité à un deuxième état d'opacité différent du premier état lorsqu'il est soumis à une tension d'alimentation, afin d'afficher une information de sécurité.

Les premiers et deuxièmes états d'opacité peuvent être matérialisés par deux couleurs ou teintes différentes. L'élément de sécurité, dans son premier état d'opacité, peut être au moins translucide.

Les matériaux ou nanomatériaux peuvent se présenter sous la forme d'une encre imprimable comprenant une poudre de particules ou nanoparticules et un liant.

Les particules ou nanoparticules peuvent comprendre une base de carbone ou d'oxydes métallique ou encore des matériaux chromogènes comme les électrochromes, photochromes, thermochromes, piezochromes.

Les matériaux ou nanomatériaux peuvent être réalisés sous forme d'une encre disposée dans un film, composé de deux couches minces au moins translucides, et ce film est inséré dans l'épaisseur du corps de carte.

Ce film de matériaux ou nanomatériaux peut être inséré dans une fenêtre réalisée dans le corps de carte.

Ce film de matériaux ou nanomatériaux peut être appliqué à la surface du corps du support.

Selon un mode de réalisation, ce support peut comprendre plusieurs films de matériaux ou nanomatériaux, chaque film étant destiné à afficher une information de sécurité particulière lorsqu'un niveau de tension déterminé lui est appliqué.

Cette information de sécurité peut masquer tout ou partie de au moins une information, inscrite dans des couches de la fenêtre réalisée dans le corps de carte.

Cette information de sécurité peut être complétée par une information visuelle complémentaire. Cette information visuelle complémentaire peut, par exemple, être présente sur le support de données à puce, ou être fournie par un second dispositif électronique.

Le support selon l'invention peut comprendre en outre une antenne et une puce pour fonctionner sans contact, l'élément de sécurité pouvant être connecté aux plots de la puce en question, par un polymère conducteur ou encre conductrice, ou par un fil conducteur ou une métallisation. Cette connexion entre l'élément sécurisé et les plots de la puce en question peut se faire par exemple entre la masse (GND) et le plot (Vcc/Vdd) d'alimentation en tension, ou bien entre la masse (GND) et une interface d'adaptation d'alimentation en tension de la puce.

Le support selon l'invention peut comprendre en outre une antenne et une puce pour fonctionner sans contact, il peut comprendre également une deuxième puce électriquement connectée à ladite antenne et audit élément de sécurité. Selon un autre mode de réalisation, il peut également comprendre une deuxième antenne et une deuxième puce, toutes deux destinées à alimenter l'élément de sécurité en tension lorsque le support est soumis à un champ magnétique.

Selon un mode de réalisation, le support fonctionnant par l'intermédiaire d'un bornier de connexions électriquement relié aux plots de contact d'une puce, l'élément de sécurité pouvant être électriquement connecté aux plots de contact GND de la masse et Vcc/Vdd d'alimentation en tension de la puce ou à une interface d'adaptation d'alimentation en tension de la puce ou aux plages de contact respectives du bornier de connexion.

Le support selon l'invention peut, par exemple, constituer une carte à puce avec et/ou sans contact.

Le support selon l'invention peut, par exemple, constituer un passeport.

D'autres particularités et avantages de l'invention apparaîtront à la lecture de la description suivante faite à titre d'exemple illustratif et non limitatif, en référence aux figures annexées qui représentent :
- les figures 1A et 1B, une carte sans contact munie d'une fenêtre translucide renfermant une information de sécurité réalisée selon l'invention, respectivement sous tension et hors tension,
- les figures 2A et 2B, une carte à contacts comprenant d'une part une fenêtre translucide renfermant une première information de sécurité réalisée selon l'invention et d'autre part une deuxième information de sécurité réalisée selon l'invention sur la surface de la carte, ladite carte à contacts étant respectivement sous tension et hors tension,
- la figure 3, un schéma en coupe d'un élément de sécurité selon un autre mode de réalisation,
- la figure 4, un schéma en coupe d'un élément de sécurité réalisé selon un premier mode de réalisation,
- la figure 5, un schéma en coupe d'un élément de sécurité selon une variante de réalisation,
- la figure 6, un schéma d'un élément de sécurité connecté à une source d'alimentation en tension selon un deuxième mode de réalisation,
- la figure 7, un schéma de connexion d'un élément de sécurité selon l'invention à un dispositif d'alimentation en tension,
- la figure 8, un schéma d'un élément de sécurité connecté à une source d'alimentation en tension selon un troisième mode de réalisation,
- la figure 9, un schéma d'un élément de sécurité connecté à une source d'alimentation en tension selon un quatrième mode de réalisation,
- la figure 10, un schéma de réalisation d'un support de données selon l'invention comprenant un élément de sécurité destiné à vérifier l'authenticité d'une ou plusieurs fonctions, ou applications lorsqu'il s'agit d'un support multi-applications,
- la figure 11, un schéma de réalisation d'un support de données selon l'invention, comprenant un élément de sécurité et dédié à une application identitaire.

Dans la présente description, on entend par tension d'alimentation, une tension qui n'est pas forcément constante. Ce peut-être par exemple une tension à niveaux variables, ou bien une tension dont le niveau peut être piloté en fonction d'événements liés à l'utilisation du support, telle que par exemple une fonction particulière ou une application, etc.... Ainsi, par exemple, dans le cadre des cartes à puce multi-applications, la tension d'alimentation délivrée par le biais de la puce par exemple, sera différente selon le type d'application réalisée par la carte.

Par élément de sécurité, on entend tout élément permettant de vérifier l'authenticité du support de données lui-même ou l'authenticité d'un échange de données ou d'une fonction au cours d'une transaction, ou d'une application effectuée.

L'invention s'applique à tout type de carte, ou document support de données, à puce avec et/ou sans contact. Ainsi, il peut s'agir d'une carte d'identité ou d'un passeport ou tout autre format pour des applications de même nature. Parmi les cartes sans contact, il existe deux sous-groupes. Un premier sous-groupe concerne les cartes dites « dual interface» ou « combi-cartes » qui comprennent un microcontrôleur radiofréquence connecté à la fois à une antenne et à un bornier de connexion pour transférer des données soit par contact soit par radio fréquence selon la technologie du lecteur avec lequel elle communique. Un deuxième sous-groupe concerne les cartes purement sans contact et les cartes hybrides. Les cartes hybrides comprennent les deux technologies, c'est-à-dire qu'elles comprennent un premier module électronique connecté à une antenne pour transférer certaines données par communication radiofréquence, et un deuxième module connecté à une bornier de connexion pour transférer d'autres données à travers les plages de contact du bornier de connexion. L'invention s'applique à tous ces types de cartes ainsi qu'à tout type de document, de type livret par exemple, renfermant les technologies précitées.

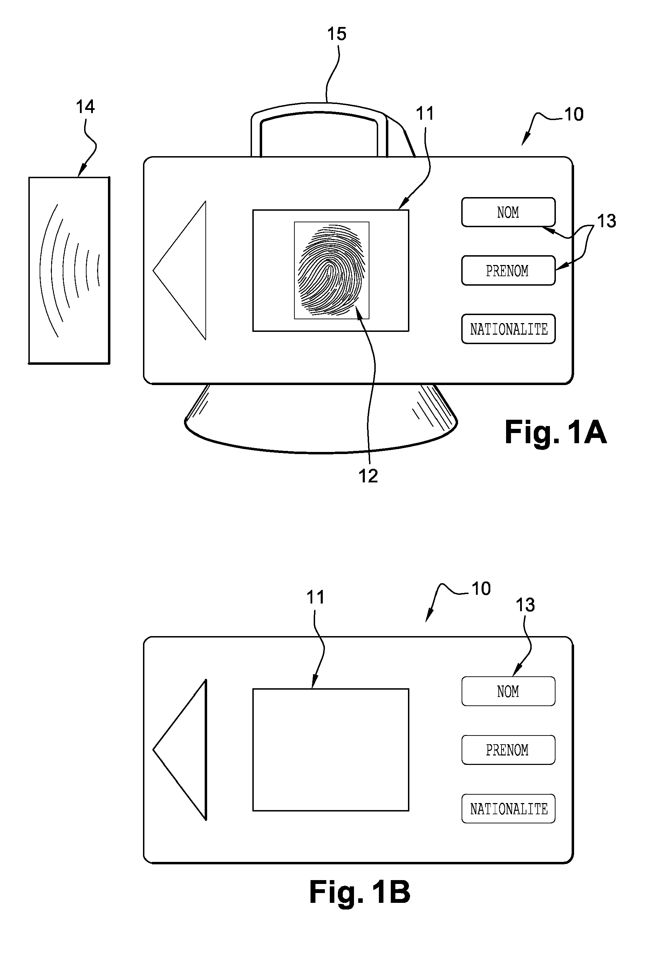

Les figures 1A et 1B schématisent un premier mode de réalisation de l'invention. Selon ce mode de réalisation, une carte à puce sans contact 10 comprend par exemple une zone 13 sur laquelle sont imprimées des données personnelles relatives au titulaire de la carte, telles que par exemple son nom, son prénom, sa nationalité, sa date de naissance, son numéro de sécurité sociale etc...

La carte comporte par exemple une deuxième zone 11, au moins translucide, encore dénommée fenêtre. Cette fenêtre est destinée à renfermer un élément sécuritaire qui peut être un motif, un logo, du texte, un hologramme, une image fantôme, une empreinte, une signature, une photo, une codification etc ...

Le terme translucide est utilisé dans toute la description pour exprimer le fait que l'on peut voir à travers, la fenêtre laissant passer la lumière. La fenêtre 11 est au moins translucide, c'est-à-dire qu'elle est au plus complètement transparente.

Lorsque la carte 10 est approchée à proximité immédiate d'un lecteur sans contact 15, son antenne reçoit le champ électromagnétique 14 émis par le lecteur, le champ électromagnétique est récupéré par la puce qui le convertit en tension. Cette tension permet ensuite d'alimenter l'élément sécuritaire. Grâce à cette alimentation en tension, une information de sécurité 12 apparaît dans la fenêtre 11 au moins translucide (voir figure 1A). En revanche, lorsque la carte ne se trouve pas dans le cône d'émission du lecteur, elle n'est pas alimentée en tension, et aucune information de sécurité ne s'affiche dans la fenêtre 11 qui apparaît totalement translucide (voir figure 1B).

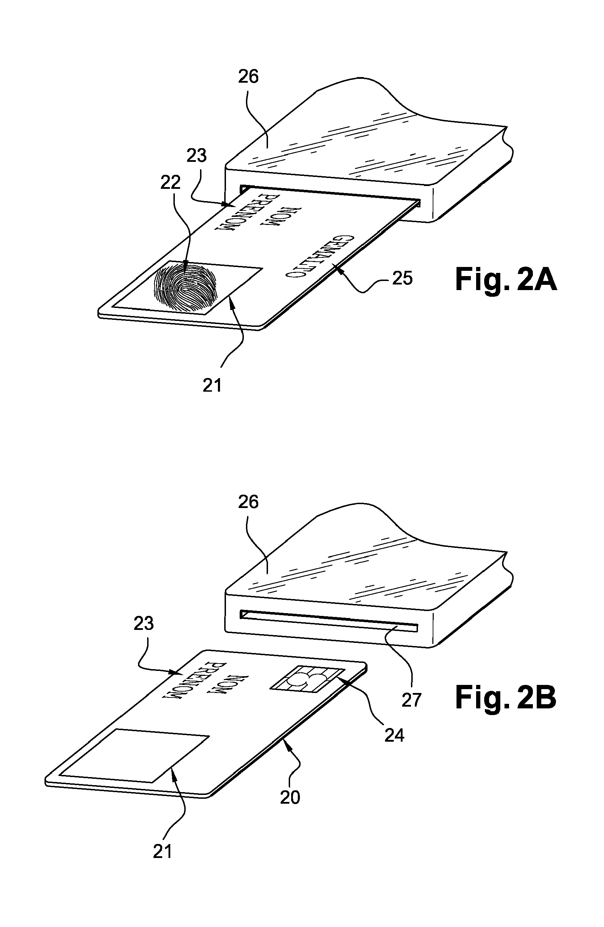

Les figures 2A et 2B illustrent un autre mode de réalisation de l'invention. Selon ce mode de réalisation, une carte à puce à contacts 20 comprend par exemple une fenêtre 21 au moins translucide renfermant un premier élément de sécurité actif 22. Un deuxième élément de sécurité actif 25 est par exemple appliqué directement sur la surface de la carte 20. La carte comprend par ailleurs un bornier de contacts 24 affleurant la surface et une zone de texte 23 sur laquelle sont imprimées des données personnelles relatives au titulaire de la carte, telles que par exemple son nom, son prénom, sa nationalité, sa date de naissance, son numéro de sécurité sociale etc...

Lorsque cette carte 20 est insérée dans la fente 27 d'un lecteur 26, une tension d'alimentation est fournie par le lecteur 26 à travers les plages de contact du bornier de connexion 24 pour faire fonctionner la carte. Une partie de cette tension d'alimentation est récupérée afin de permettre l'affichage du premier élément de sécurité 22 dans la fenêtre 21 et du deuxième élément de sécurité 25 à la surface de la carte (voir figure 2A). Les éléments de sécurité peuvent par exemple être un motif, un logo, du texte, un hologramme, une image fantôme, une empreinte, une signature, une photo etc ... Dans l'exemple de la figure 2A, le premier élément de sécurité affiche une l'empreinte 22 du titulaire de la carte, tandis que le deuxième élément de sécurité affiche un logo 25.

La figure 2B schématise cette même carte 20 à contacts 24 lorsqu'elle n'est plus insérée dans la fente du lecteur 26. Dans ce cas, elle n'est plus alimentée en tension, et les éléments de sécurité 22 et 25 sont complètement invisibles.

Les éléments de sécurité ainsi réalisés comprennent au moins un matériau ou nanomatériau de type chromogène bistable apte à passer d'un état au moins translucide à un état opaque, ou inversement, lorsqu'il est soumis à une tension d'alimentation.

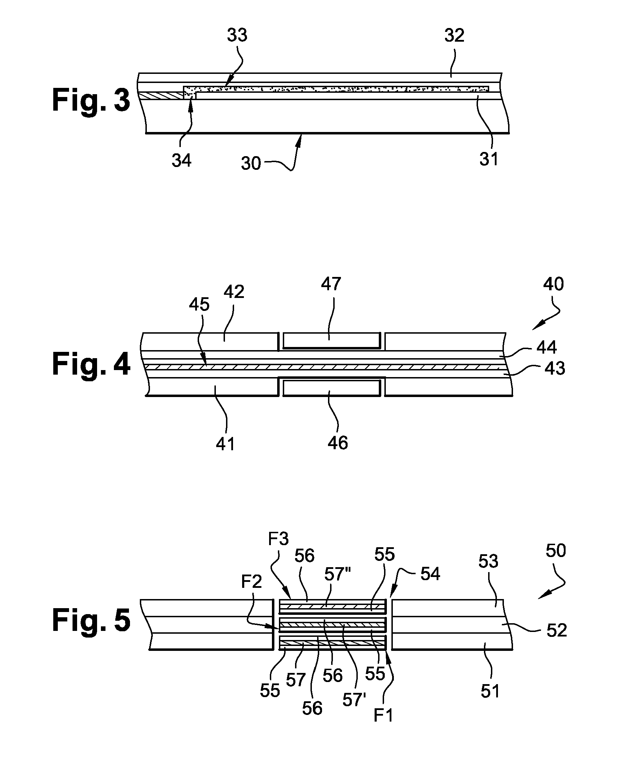

Les matériaux ou nanomatériaux utilisés peuvent se présenter sous la forme d'une encre comprenant une poudre de particules ou de nanoparticules mélangées à un liant qui agglomère des particules solides sous forme de poudre. Les particules comprennent une base métal et sont optiquement transparentes lorsqu'elles ne sont pas alimentées en tension. L'utilisation d'une telle encre est par exemple schématisée sur la figure 3. Sur le schéma en coupe de la figure 3, l'élément de sécurité, réalisé avec une encre 33 comprenant des particules, est disposé à la surface d'une carte 30. Bien sûr, cette encre peut également être imprimée de la même manière dans une fenêtre au moins translucide ou partiellement translucide. Sur le schéma de la figure 3, le corps de carte 30 est tout d'abord recouvert d'une couche de protection 31 fixée par lamination. Une information de sécurité est ensuite imprimée au moyen de l'encre 33 à base de matériau chromogène à effet bistable. De préférence au moins un trou débouchant 34 est pratiqué dans l'épaisseur d'au moins la couche de protection 31 et est rempli par l'encre 33. Ce trou permet ensuite d'établir une connexion via un élément conducteur, ou directement avec la même encre, dans une ou plusieurs couches du corps de carte situé(es), sous la couche de protection 31, afin de pouvoir relier élément de sécurité à une source d'alimentation en tension. De préférence, la couche de protection 31 est opaque afin de garder les éléments de connexion invisibles de l'extérieur. L'élément de sécurité ainsi imprimé est ensuite protégé des agressions extérieures par une autre couche de protection transparente 32 encore appelée overlay dans le jargon des cartes.

Dans un autre mode de réalisation, telle qu'illustré sur la figure 4, le matériau ou nanomatériau utilisé peut se présenter sous une autre forme, par exemple sous forme de particules ou nanoparticules en suspension dans le même liant, pour former une encre, laquelle encre est renfermée entre deux couches minces 43, 44. Dans ce cas, les nanoparticules comprennent une base métal et sont optiquement transparentes lorsqu'elles ne sont pas alimentées en tension. L'assemblage de deux couches minces 43, 44 renfermant une encre 45 à base de particules ou de nanoparticules de type chromogène bistable est dénommé, dans la suite de la description, film de nanomatériau. Les couches minces 43, 44 du film sont avantageusement transparente pour pouvoir visualiser le changement d'état du matériau lorsqu'il est mis sous tension. Leur épaisseur est par exemple de quelques dizaines de microns. Dans l'exemple schématisé sur la figure 4, le film de nanomatériau constitue l'une des couches de constitution du corps de carte et il est laminé avec toutes les autres de couches de constitution 41, 42 pour former le corps de carte 40. Dans ce cas, des ouvertures sont par exemple pratiquées dans les couches de constitution 41, 42 pour créer une fenêtre et laisser apparaître le film de nanomatériau. Ensuite, le film est protégé par deux couches 46, 47 au moins translucides et affleurant la surface du corps de carte. La connexion du matériau avec une source d'alimentation en tension est réalisée à l'intérieur du corps de carte, entre les couches de constitution.

Dans une variante de réalisation, les deux couches minces 43, 44 constitutives du film de nanomatériau peuvent être réalisées dans un polymère conducteur. Dans ce cas, ce n'est plus l'encre elle-même qui est directement connectée à une source d'alimentation en tension, mais elle est connectée via les deux couches minces 43, 44 en polymère conducteur.

Dans une variante de réalisation, schématisée sur la figure 5, le film de nanomatériau peut être découpé aux dimensions de la fenêtre 54 à réaliser dans le corps de carte 50 et inséré dans cette fenêtre par un procédé connu. Il est en outre possible de superposer plusieurs films de nanomatériau F1, F2, F3 dans le corps de carte 50 ou dans la fenêtre 54, comme cela est illustré sur le schéma en coupe de la figure 5. Sur cette figure, trois films F1, F2, F3 sont superposés, chaque film renfermant une couche de matériaux ou de nanomatériaux de type chromogème bistable différent, 57, 57', 57", apte à émettre une opacité et/ou une couleur différente des autres en fonction d'un niveau de tension qui lui est appliqué. Dans ce cas, chaque film est connecté à un dispositif d'alimentation en tension de construction relativement complexe, apte à alimenter chaque film indépendamment les uns des autres, pour pourvoir afficher différentes informations en fonction d'évènements liés à l'utilisation de la carte.

Quel que soit le mode de réalisation, les nanomatériaux utilisés peuvent être à base de nanotubes de carbone, d'oxydes métalliques ou de type chromogènes comme les électrochromes, photochromes, thermochromes, piezochromes etc... Le liant utilisé est un produit liquide qui agglomère les particules solides sous forme de poudre. Une de ces fonctions est de permettre l'accroche ou la tenue de l'encre au support tout en conservant l'orientation des particules elle-même.

Au repos, c'est-à-dire hors tension, les particules, sont désorientées et réparties de manière totalement aléatoire les unes par rapport aux autres dans le liant, de telle sorte qu'elles laissent passer la lumière si bien que l'information de sécurité apparaît totalement invisible à l'oeil nu. Lorsqu'une tension d'alimentation est appliquée sur le dispositif, les particules s'orientent et s'alignent les unes par rapport aux autres de sorte qu'elles absorbent la lumière transmise et deviennent opaques. Ainsi, dans l'exemple schématisé sur les figures 1A et 2A, les particules actives sont positionnées ou imprimées très précisément, aux endroits qui deviennent opaques, ou noir sur les figures. Les zones restées translucides, dans ce cas, ne contiennent pas de matériaux actifs. Ainsi, lorsque l'élément de sécurité 11 est mis sous tension, les particules s'opacifient et/ou prennent une couleur, si bien que l'information de sécurité 12 apparaît.

Ces matériaux ou nanomatériaux présentent l'avantage de ne consommer que très peu d'énergie, typiquement de l'ordre de quelques pA, alors que aux LED existantes consomment des courants de l'ordre de quelques mA. Par conséquent, contrairement aux LED, Ces matériaux une fois assemblé selon le dispositif ne nécessitent pas une alimentation dédiée qui pourrait perturber le fonctionnement de l'application.

Pour que l'élément de sécurité ainsi réalisé affiche une information de sécurité uniquement lorsque le support est soumis à une tension d'alimentation, il est nécessaire de raccorder cet élément de sécurité à une source, dédiée ou non, d'alimentation en tension.

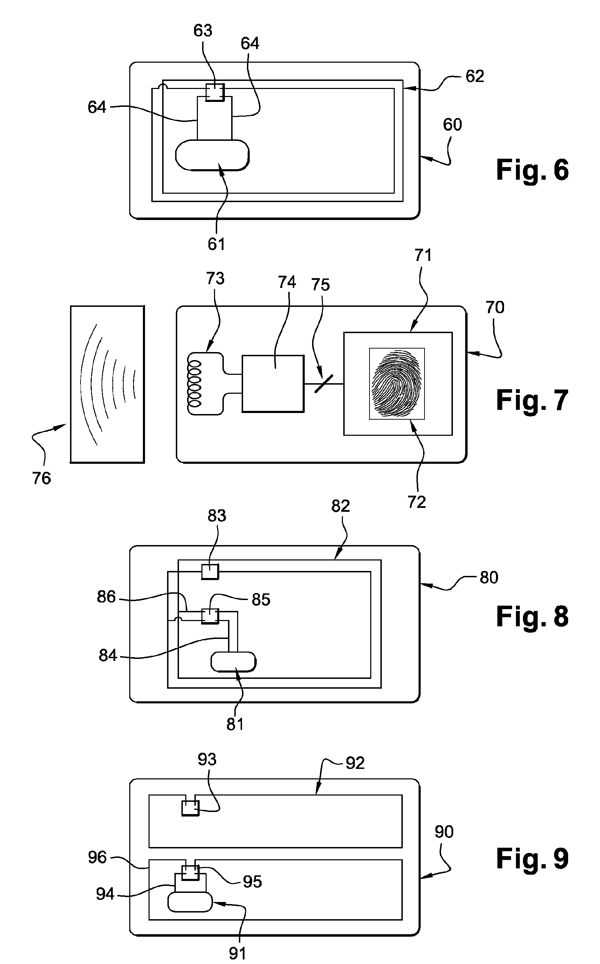

Pour cela, un premier mode de connexion tel que schématisé sur la figure 6, consiste à connecter soit l'encre elle-même déposée, contenant des matériaux ou nanomatériaux de type chromogène, directement sur les plots d'alimentation en tension Vcc, (ou Vdd) et GND de la puce 63, soit les deux couches de constitution d'au moins un film de nanomatériau dans le cas où ces couches sont réalisées à base d'un polymère conducteur, sur les plots d'alimentation en tension de la puce. Le schéma de la figure 6 représente plus particulièrement, de manière très simplifiée, une couche 60 de constitution d'un corps de carte à puce sans contact comprenant une antenne 62 dont les extrémités sont connectées aux plots de contact d'une puce ou d'un module 63 sans contact. Dans ce schéma, l'élément de sécurité est représenté par une fenêtre 61 et comprend un ou plusieurs films de nanomatériau, ou une encre à base de matériaux ou nanomatériaux imprimée dans les couches de constitution de la fenêtre. L'élément de sécurité est connecté par le biais de moyens de connexion 64, qui peuvent être des fils conducteurs, ou bien l'encre elle-même, au plots d'alimentation en tension de la puce ou du module 63 sans contact. Une autre alternative est connecté aux plots de contact GND de la masse et à une interface d'adaptation d'alimentation en tension de la puce. Cette interface d'adaptation peut être disponible sur la puce elle-même ou en éléments ajoutés à la puce.

De même, lorsqu'il s'agit d'un support à contact, l'encre à base de matériaux ou nanomatériaux chromogènes peut être imprimée directement à la surface du support et raccordée aux plages de contact de la puce par l'intermédiaire du bornier de connexion. En général, les inscriptions réalisées en surface d'un support sont protégées des agressions extérieures par un overlay, qui est une couche fine en matériau polymère. Dans ce cas encore, on peut prévoir de réaliser l'overlay en polymère conducteur et de le connecter aux bornes de la puce par l'intermédiaire du bornier de connexion.

Selon un autre mode de connexion tel que schématisé sur la figure 7, l'encre comprenant les matériaux ou nanomatériaux, ou les couches de polymère conducteur d'un film de nanomatériau constitutif de la fenêtre translucide 71, sont connectées aux bornes d'un dispositif d'alimentation 74 intégré dans le support de données sans contact 70. Dans sa plus simple conception, le dispositif d'alimentation 74 peut être le régulateur de tension d'une carte sans contact. Cependant, le dispositif d'alimentation peut être de construction plus complexe lorsqu'il permet par exemple d'alimenter plusieurs films de nanomatériau. Lorsque la carte sans contact reçoit le champ électromagnétique 76 émis par un lecteur, le champ circule dans l'antenne 73 de la carte et est récupéré puis converti en tension par le dispositif 74 d'alimentation en tension. Le dispositif d'alimentation 74 alimente alors l'élément de sécurité à base de matériaux ou nanomatériaux pour pouvoir afficher au moins une information de sécurité 72. Lors de l'alimentation en tension avec une tension supérieure au seuil d'activation suivant les matériaux, les particules s'orientent et s'alignent les unes par rapport aux autres pour devenir opaques et laissent ainsi apparaître une information de sécurité 72.

Une autre variante, schématisée sur la figure 8, consiste à connecter, sur l'antenne 82 existante d'une carte sans contact 80, une deuxième puce 85 dédiée plus petite, afin de récupérer le champ électromagnétique et de le convertir sous forme de tension pour la restituer au composant à base de matériaux ou nanomatériaux chromogènes bistables constitutif de l'élément de sécurité 81. Des moyens de connexion 86, 84 permettent de connecter la puce dédiée 85 respectivement à l'antenne existante 82 et à l'élément de sécurité 81. Ces moyens de connexion se matérialisent par des fils conducteurs ou par l'encre à base de matériaux conducteurs par exemple.

Une autre variante de connexion, telle que schématisée sur la figure 9, consiste à connecter le(s) matériau(x) de constitution de l'élément de sécurité aux bornes de son propre dispositif radiofréquence, constitué d'une petite antenne additionnelle 96 et d'une micro-puce 95, également insérées dans le corps du support 90. La micro-puce 95 permet, là encore, de récupérer le champ électromagnétique circulant dans l'antenne dédiée 96, puis de le convertir en tension afin d'alimenter le ou les films du dispositif de sécurité 91, par le biais de moyens de connexion 94. Cette variante de réalisation permet de délivrer plus de tension pour réaliser un affichage plus important.

Grâce à l'invention, une tentative de délaminage des couches de constitution du support, entraîne une destruction de la connexion de l'élément de sécurité avec la source d'alimentation en tension, voire même la destruction de l'élément de sécurité lui-même.

Les applications d'un tel élément de sécurité actif sont nombreuses. Ainsi, on pourrait utiliser un tel élément sur des cartes bancaires pour permettre d'une part au titulaire de la carte de vérifier que la carte effectue une transaction et d'autre part au commerçant de vérifier l'authenticité de la carte utilisée pour effectuer la transaction.

De plus, lorsque l'élément de sécurité est constitué de plusieurs films de matériaux ou nanomatériaux de type chromogène bistable, réalisés à partir de particules réagissant à des niveaux de tension différents pour afficher une information avec une opacité, et éventuellement une couleur ou une teinte, différente, il permet de vérifier quelle est l'étape de la transaction en cours d'exécution. Dans même, lorsqu'il s'agit d'une carte multi-applications, il est possible de vérifier quelle est l'application en cours d'exécution.

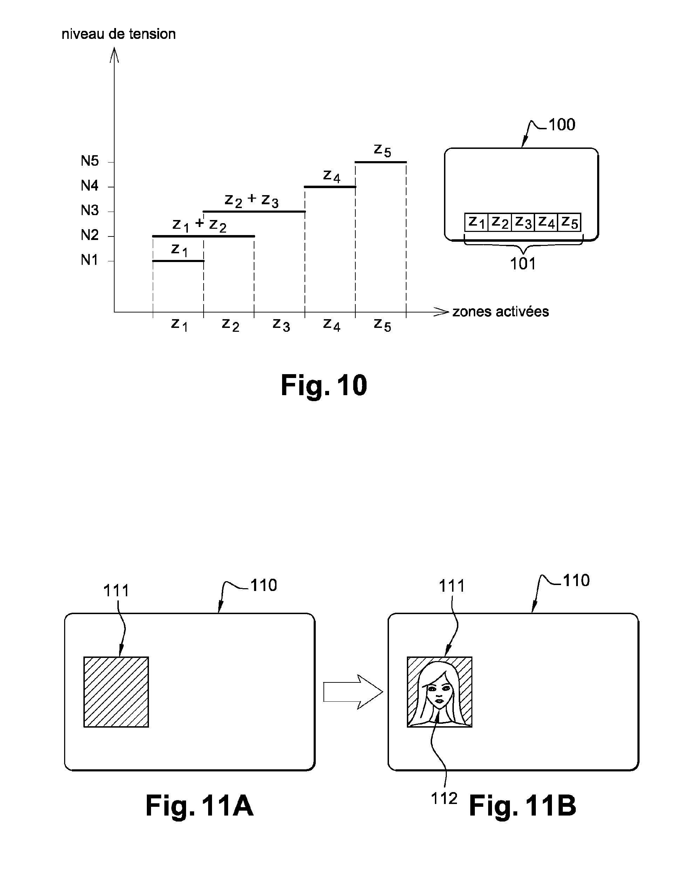

La figure 10 permet d'illustrer ce propos. Ainsi, lorsque la carte 100 sans contact est destinée à être utilisée pour plusieurs applications de types bancaire, transport, accès ou autre, l'élément sécuritaire 101 peut par exemple être divisé en plusieurs zones. Dans l'exemple schématisé sur la figure 10, cinq zones Z1-Z5 sont représentées. Une ou plusieurs zones sont alors dédiées à une application. Par exemple les zones Z1 à Z3 sont dédiées à une application bancaire, tandis que la zone Z4 est dédiée au transport, et la zone Z5 à l'identitaire. Dans ce cas, en fonction de l'application en cours de traitement, un niveau de tension N1-N5 différent est appliqué et permet d'afficher la zone Z, dédiée à l'application, contenant des particules réagissant au niveau de tension délivré pour cette application.

Ainsi, lorsque l'application transport est activée, avec un niveau de tension N4, la zone Z4 de l'élément de sécurité va afficher une information liée à cette application. Cette information peut par exemple être un logo représentant l'application ou simplement une couleur, ou un texte ou autre. Lorsque l'application identitaire est activée, avec un niveau de tension N5, la zone Z5 de l'élément de sécurité affiche une information liée à l'identité du titulaire de la carte. Cette information peut par exemple être affichée sous forme de texte tel que le nom du titulaire, ou bien sous forme d'image et représenter la photo du titulaire.

Enfin, lorsque l'application bancaire est activée, selon les niveaux de tension délivrés en fonction des étapes de la transaction, une zone ou plusieurs des trois zones Z1-Z3 dédiées vont afficher une information liée à la fonction en cours de traitement. Ainsi par exemple, un niveau de tension N1 permet d'afficher, dans la première zone Z1, une information liée par exemple à la fonction d'authentification de l'utilisateur. Un deuxième niveau de tension N2 permet ensuite d'afficher une autre information dans la zone 2 liée par exemple à la fonction saisie du montant à débiter. Dans ce cas, la zone Z2 affiche le montant de la transaction. Le deuxième niveau de tension N2 permet soit d'afficher la zone Z2, soit les zones Z1 et Z2 simultanément. Puis un troisième niveau de tension N3 permet par exemple d'afficher une information dans la zone Z3 liée par exemple à la fonction de fin de transaction pour indiquer qu'une transaction a bien abouti ou bien qu'elle a échoué tout en conservant affichée l'information liée au montant de la transaction dans la zone Z2. Un niveau de tension lié au fait que la transaction a abouti, permettra par exemple d'activer l'affichage dans la zone Z3 d'un élément particulier, par exemple un carré vert, alors que un autre niveau de tension lié à un échec de la transaction permettra de par exemple d'activer l'affichage dans la zone Z3 d'un autre élément par réaction d'un autre film de nanomatériau, par exemple l'affichage d'un carré rouge.

Lorsqu'un niveau de tension dépasse une valeur seuil supérieure, par exemple, lorsque le niveau N4 de tension permettant d'activer les matériaux ou nanomatériaux de la zone Z4, augmente et dépasse une valeur seuil, les particules de cette zone peuvent soit redevenir plus ou moins translucide ou soit rester dans leur état d'opacité jusqu'à ce qu'elles ne soient plus du tout alimentées en tension.

Une autre application concerne les contrôles d'identité. Dans ce cas, l'élément de sécurité actif peut par exemple être la reproduction de la photo du titulaire du support d'identification ou encore une empreinte du titulaire. Dans le cas de la photo, elle peut être directement comparée à la photo imprimée sur le support d'identification. Dans le cas d'une empreinte, elle peut par exemple être comparée à celle du titulaire du support prise en temps réel au point de contrôle d'identité.

Un exemple d'une telle carte 110 munie d'un élément de sécurité 111 pour une application identitaire est en outre schématisé sur les figures 11A et 11B. Dans cet exemple, contrairement aux exemples des figures 1 et 2, l'élément de sécurité 111, qui se présente dans cet exemple sous la forme d'une fenêtre, n'est pas translucide au repos mais opaque. Puis, lorsqu'une tension est appliquée, la photo du titulaire 112 apparaît du fait que les matériaux ou nanomatériaux disposées dans l'élément de sécurité sont disposées de telle sorte qu'elles dessinent les contours de la face du titulaire et elles réagissent lorsqu'elles sont alimentées en tension de sorte qu'elles deviennent translucides.

De manière générale, l'élément de sécurité peut varier d'un support à un autre. L'information de sécurité affichée par l'élément de sécurité peut aussi être en parallèle stocké dans la puce, afin de s'assurer que le corps de carte est bien d'origine et que ni la puce, ni la fenêtre translucide renfermant l'élément de sécurité n'ont été échangés.

Une autre application s'appuie sur la répartition du visuel entre l'élément de sécurité et un second support. Ce support peut être un dispositif externe tel qu'un lecteur sans contact, ou bien le corps de carte lui même, au delà de l'élément de sécurité.

Ce mode d'implémentation est particulièrement intéressant pour préserver au maximum la confidentialité des informations contenue dans le visuel. Dans un contexte d'identité électronique, un document personnel peut contenir des informations permettant sa lecture par un procédé électronique. C'est par exemple le cas des passeports dits « optiques » qui possèdent une série d'informations lisible par un lecteur optique. L'inconvénient de cette solution est que, une simple lecture visuelle de ces informations est possible, et cela va à l'encontre d'une protection optimale de la vie privée du propriétaire du passeport. La mise en place de l'invention peut permettre, de ne faire apparaître certaines informations qu'en présence d'un champ électromagnétique, et ainsi ne permettre une lecture optique complète que dans ces conditions.

L'utilisation d'un dispositif tiers pour compléter le visuel peut permettre, par exemple, d'associer fortement un document électronique équipé d'un élément de sécurité, et un lecteur sans contact. Ainsi, un visuel peut se trouver réparti entre le corps du lecteur et l'élément sécurisé. Ainsi en plaçant le document dans le champ du lecteur, la partie du visuel embarquée dans l'élément sécurisé apparaît, et vient compléter le visuel incomplet du lecteur.

Un mode de réalisation particulier implique un afficheur électronique dans la zone d'action du lecteur. Dans un mode préféré de réalisation cet afficheur est intégré au lecteur. Cet afficheur peut ainsi afficher un visuel partiel qui vient en complément de celui contenu dans l'élément sécurisé.

Ce visuel peut par exemple être dépendant du dispositif sans contact présenté devant le lecteur, choisi par le dispositif électronique contenant l'afficheur, ou obtenu d'un dispositif électronique tiers.

Une autre application s'appuie, non plus sur l'affichage d'un visuel, mais sur le masquage de tout ou partie d'informations inscrites dans les couches composant l'élément sécurisé. Dans ce mode de réalisation, un ensemble d'informations peuvent être par exemple gravées au moyen d'un laser dans au moins une des couches translucides qui composent l'élément sécurisé. Le visuel affichable selon l'invention peut alors cacher une ou plusieurs de ces informations lors de la présentation du dispositif électronique dans le champ radiofréquence d'un lecteur sans contact.

Cette application de l'invention est particulièrement intéressant dans un contexte de personnalisation multiple.

Ainsi, lors d'une première personnalisation les informations sont gravées dans les couches de l'élément sécurisé, et dans une seconde personnalisation le visuel est installé pour masquer tout ou partie de ces informations graphiques. Dans le cas d'un dispositif ayant une date de validité, il est intéressant par exemple, de prévoir une liste mois et d'année dans la transparence de l'élément sécurisé, et lors de l'affichage du visuel, de ne laisser visible que le mois et l'année correspondant à la validité du dispositif. Dans ce mode d'application, le visuel peut être diversifié par dispositif, par série, ou tout autre mode de tri.

## Revendications

1. Support de données à puce, comportant au moins un élément de sécurité, **caractérisé en ce que** l'élément de sécurité comprend au moins un matériau ou nanomatériau de type chromogène bistable, apte à passer d'un premier état d'opacité à un deuxième état d'opacité différent du premier état lorsqu'il est soumis à une tension d'alimentation, afin d'afficher une information de sécurité.

2. Support selon la revendication 1, **caractérisé en ce que** les premiers et deuxièmes états d'opacité sont matérialisés par deux couleurs ou teintes différentes.

3. Support selon la revendication 1, **caractérisé en ce que** l'élément de sécurité, dans son premier état d'opacité, est au moins translucide.

4. Support selon l'une des revendications précédentes, **caractérisé en ce que** les matériaux ou nanomatériaux se présente sous la forme d'une encre imprimable comprenant une poudre de particules ou nanoparticules et un liant.

5. Support selon la revendication 4, **caractérisé en ce que** les particules ou nanoparticules comprennent une base de carbone ou d'oxydes métallique ou encore des matériaux chromogènes comme les électrochromes, photochromes, thermochromes, piezochromes.

6. Support selon la revendication 1, **caractérisé en ce que** les matériaux ou nanomatériaux sont réalisés sous forme d'une encre disposée dans un film, composé de deux couches minces au moins translucides, et **en ce que** ledit film est inséré dans l'épaisseur du corps de carte.

7. Support selon la revendication 6, **caractérisé en ce que** le film de matériaux ou nanomatériaux est inséré dans une fenêtre réalisée dans le corps de carte.

8. Support selon la revendication 6, **caractérisé en ce que** le film de matériaux ou nanomatériaux est appliqué à la surface du corps du support.

9. Support selon l'une des revendications 6 à 8, **caractérisé en ce qu'**il comprend plusieurs films de matériaux ou nanomatériaux, chaque film étant destiné à afficher une information de sécurité particulière lorsqu'un niveau de tension déterminé lui est appliqué.

10. Support selon la revendication 6, **caractérisé en ce que** ladite information de sécurité masque tout ou partie de au moins une information, inscrite dans des couches de ladite fenêtre réalisée dans le corps de carte.

11. Support selon l'une des revendications précédentes, **caractérisé en ce que** ladite information de sécurité doit être complétée par une information visuelle complémentaire.

12. Support selon la revendication 11, **caractérisé en ce que** ladite information visuelle complémentaire est présente sur ledit support de données à puce

13. Support selon la revendication 11, **caractérisé en ce que** ladite information visuelle complémentaire est fournie par un second dispositif électronique.

14. Support selon l'une des revendications précédentes, ledit support comprenant en outre une antenne et une puce pour fonctionner, **caractérisé en ce que** l'élément de sécurité est connecté aux plots de ladite puce, par un polymère conducteur ou encre conductrice.

15. Support selon l'une des revendications précédentes, ledit support comprenant en outre une antenne et une puce pour fonctionner, **caractérisé en ce que** l'élément de sécurité est connecté aux plots de ladite puce, par un fil conducteur ou une métallisation.

16. Support selon l'une des revendications précédentes, ledit support comprenant en outre une antenne et une puce pour fonctionner sans contact, **caractérisé en ce que** l'élément de sécurité est connecté aux plots de ladite puce, entre la masse (GND) et le plot (Vcc/Vdd) d'alimentation en tension.

17. Support selon l'une des revendications précédentes, ledit support comprenant en outre une antenne et une puce pour fonctionner sans contact, **caractérisé en ce que** l'élément de sécurité est connecté aux plots de ladite puce, entre la masse (GND) et une interface d'adaptation d'alimentation en tension de la puce.

18. Support selon l'une des revendications 1 à 17, ledit support comprenant en outre une antenne et une puce pour fonctionner sans contact, **caractérisé en ce qu'**il comprend en outre une deuxième puce électriquement connectée à ladite antenne et audit élément de sécurité.

19. Support selon l'une des revendications 1 à 17, ledit support comprenant en outre une antenne et une puce pour fonctionner sans contact, **caractérisé en ce qu'**il comprend une deuxième antenne et une deuxième puce, lesdites deuxièmes antenne et puce étant destinées à alimenter l'élément de sécurité en tension lorsque le support est soumis à un champ magnétique.

20. Support selon l'une des revendications 1 à 17, ledit support fonctionnant par l'intermédiaire d'un bornier de connexions électriquement relié aux plots de contact d'une puce, **caractérisé en ce que** l'élément de sécurité est électriquement connecté aux plots de contact GND de la masse et Vcc/Vdd d'alimentation en tension de la puce ou à une interface d'adaptation d'alimentation en tension de la puce ou aux plages de contact respectives du bornier de connexion.
